(19) Europäisches Patentamt
European Patent Office
Office européen des brevets

(11) EP 0 868 940 A1

(12) EUROPEAN PATENT APPLICATION

(43) Date of publication:
07.10.1998 Bulletin 1998/41

(51) Int. Cl.[6]: B01D 53/94

(21) Application number: 98105891.0

(22) Date of filing: 31.03.1998

(84) Designated Contracting States:
AT BE CH DE DK ES FI FR GB GR IE IT LI LU MC NL PT SE
Designated Extension States:
AL LT LV MK RO SI

(30) Priority: 31.03.1997 JP 79763/97
30.09.1997 JP 267150/97

(71) Applicant:
MAZDA MOTOR CORPORATION
Aki-gun, Hiroshima 730-91 (JP)

(72) Inventors:
- Kurokawa, Takahiro
Hiroshima-shi, Hiroshima (JP)
- Ueda, Toshitsugu
Higashihiroshima-shi, Hiroshima (JP)
- Kyogoku, Makoto
Hiroshima-shi, Hiroshima (JP)
- Okamoto, Kenki
Hiroshima-shi, Hiroshima (JP)
- Takami, Akihide
Hiroshima-shi, Hiroshima (JP)
- Watanabe, Yasuto
Iwakuni-shi, Yamaguchi (JP)

(74) Representative:
Müller-Boré & Partner
Patentanwälte
Grafinger Strasse 2
81671 München (DE)

# (54) Catalyst for purifying exhaust gas, process for manufacturing the catalyst and process for making use of the catalyst

(57) An object of the invention is to provide a catalyst for purifying sufficiently both NOx at high exhaust gas temperature and HC and CO at low exhaust gas temperature in using engines normally operated with excess air such as diesel or lean-burn engine.
The catalyst comprises the following two types of catalysts in the form of mixture or double layers supported on a honeycomb substrate; (a) a first type zeolite catalyst in which the active metal becomes supported on the zeolite by ion-exchange process and (b) a second type zeolite catalyst in which the active metal becomes supported on the zeolite by other process than ion-exchange. At high exhaust gas temperature, the first type zeolite catalyst converts paraffin type HC and/or olefin type HC into aromatic HC. The second type zeolite catalyst can reduce NOx into $N_2$ by making use of the aromatic HC as a reductant remaining in the gas even at high temperature.
At low exhaust gas temperature, the first type zeolite catalyst converts a medium size (medium carbon number ) aromatic HC into a small size olefin type HC (cracking ) and the second type zeolite catalyst can rapidly oxidize the small size olefin type HC to form $H_2O$ and $CO_2$. As a whole the catalyst gains a performance improvement in both purification of NOx at high temperature and its activity at low temperature.

FIG. 1

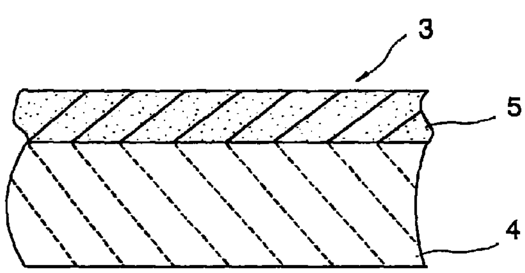

## Description

The invention relates to a catalyst for purifying exhaust gas, process for manufacturing the catalyst and process for making use of the catalyst and, more particularly, to those suitable for giving both improved purification of NOx at higher exhaust gas temperature and improved catalytic activity at lower exhaust gas temperature in internal combustion engines such as lean-burn engines.

Some of these emissions, such as water, oxygen, nitrogen, and carbon dioxide, are of little concern. Others, such as hydrocarbons (HC), oxides of nitrogen (NOx) and carbon monoxide (CO) can pose a health problem for the nation if uncontrolled. It is a strong tendency all over the world to intensify automobile emission regulations. Excellent progress has been made in the development of a number of emission control devices. For example, as a catalyst used for exhaust gas purification devices or catalytic converters for automobile engines, a material having noble metals such as platinum (Pt) carried on a carrier material such as alumina, where the platinum content is about 1 g/L-cat., has been widely utilized.

Recently much attention has been focused on a diesel engine or a lean-burn engine for compact cars which is designed to burn an air-fuel mixture at an air-fuel ratio (A/F) of higher than 22 which is significantly leaner than a stoichiometric air-fuel mixture under normal driving conditions because of their lower fuel consumption. These internal combustion engines or diesel engines are normally operated under the excess amount of air relative to the amount of fuel feed, so as to yield improvement of fuel efficiency. The term "excess air combustion" used hereafter shall mean and refer to combustion in the diesel engine under normal operating conditions or combustion of the lean-burn engine.

Such internal combustion engines including diesel engines and lean-burn engines, however, bring about the following problems in terms of exhaust gas purification performance, although they provide a high performance in terms of fuel consumption. Namely, in using the these engines, it becomes difficult to reduce an NOx emission at a high temperature of the exhaust gas because of the low concentration of HC in the exhaust gas, which is used as a reducing element to reduce NOx into nitrogen ($N_2$) through decomposition. However, the HC content in the exhaust gas becomes low due to the high concentration, more than 4% or more than 10% in diesel engine, of oxygen resulting from excess air combustion, which easily oxidizes (decomposes) HC especially at high temperature, as a result of which it is difficult to reduce NOx efficiently.

The applicant of this application has disclosed catalysts specially good for purifying NOx, one of which, as known from Japanese Unexamined Patent Publication 7 (1995) - 24326, comprises platinum (Pt), iridium (Ir) and rhodium (Rh) carried on a zeolite catalyst with platinum carried through ion-exchange, and another of which, known from Japanese Unexamined Patent Publication 7(1985)-124476, has platinum, iridium and rhodium carried on a zeolite catalyst through ion-exchange after the platinum has been carried through spray-dry process,

A temperature of the exhaust gas is often low in the normal operation of a diesel engine or a lean-burn engine, which causes to prevent effective oxidization of hydrocarbons (HC) and carbon monoxide (CO) because of low performance of the catalyst at the low temperature. Thus there has been a strong demand for a catalyst which keeps high activity even at low temperature.

An object of the invention is to provide a catalyst for purifying sufficiently both NOx at high exhaust gas temperature and HC and CO at low exhaust gas temperature by keeping a good activity of the catalyst both at high and low temperature when used for engines in which excess air combustion takes place under normal operating conditions.

A catalyst for purifying exhaust gas comprises a zeolite type catalyst where an active metal is carried on a zeolite, wherein the zeolite type catalyst consists of (a) a first type zeolite catalyst in which the active metal becomes supported on the zeolite by ion-exchange process and (b) a second type zeolite catalyst in which the active metal becomes supported on the zeolite by other process than ion-exchange. In the second type zeolite catalyst, it is preferable that the active metal is carried by the zeolite while it is physically mixed with the zeolite. For instance, by using an impregnation process, an evaporation-dry process or spray-dry process. An active metal should be a noble metal such as Pt, Rh, palladium (Pd) or Ir. One example of a weight ratio of the first type zeolite catalyst to the second type is 1 to 1.

In using the catalyst of the invention set forth, the first type zeolite catalyst converts paraffin type HC and/or olefin type HC which are easily oxidized into aromatic HC which is difficult to be oxidized at high exhaust gas temperature. The second type zeolite catalyst can reduce NOx into $N_2$ by making use of the aromatic HC as a reductant remaining in the gas even at high temperature. Thus the catalyst obtains a good capability of purifying NOx at high gas temperature. At low exhaust gas temperature, the first type zeolite catalyst converts a medium size (medium carbon number) aromatic HC which is difficult to be oxidized into a small size olefin type HC (cracking ) and the second type zeolite catalyst rapidly promotes the oxidization of the small size olefin type HC to form $H_2O$ and $CO_2$. Thus the catalyst also obtains a good capability of purifying HC at low gas temperature. As a whole the catalyst gains a performance improvement in both purification of NOx at high temperature and its activity at low temperature in the case of internal combustion with excess amount of air in such as diesel or lean-burn engine.

In the purifying catalyst of the first embodiment of the invention above, it is preferable that the mixture of the first type zeolite catalyst and the second type zeolite catalyst are contained in the same layer of the purifying catalyst. At high gas temperature, such construction of the catalyst will improve functions performed both by the first type zeolite catalyst for converting a paraffin type HC or an olefin type HC into an aromatic HC and by the second type catalyst for decomposing NOx, especially purification of NOx at the temperature between 250 and 300°C will be improved. In other words, in such type of catalyst, a temperature range for giving the highest performance for purifying NOx is shifted to higher temperature area by converting HC into aromatic HC which keeps a good capacity as a reductant and slow rate of being oxidized at even high temperature. MFI type zeolite (trade name: ZSM5 ) is recommended as a support material of the second zeolite type catalyst to obtain a high performance for purifying NOx at the temperature 250 - 300 °C. MFI type zeolite may be replaced with β type zeolite or Y type zeolite (FAU type) to obtain a better performance for purifying HC and CO at lower temperature. MFI type zeolite (trade name: ZSM5 ) is also recommended as a support material of the first zeolite type catalyst to obtain a high performance of the catalyst for purifying NOx at the temperature 250 - 300°C. MFI type zeolite may be replaced with β type zeolite to obtain a better performance for purifying HC and CO at lower temperature.

In the first embodiment of the invention, another preferable catalyst has a layered structure having an inner catalytic layer and an outer catalytic layer thereon, in which the first type catalyst is included in the outer layer and the second type catalyst is located in the inner catalytic layer. In such structure of the catalyst the function of the first type catalyst for converting the aromatic HC into small size olefin HC is improved and the capability of the second type catalyst for decomposing the small size olefin HC is increased at lower temperature of the exhaust gas. NOx is purified by the second type zeolite catalyst in the inner layer. MFI type zeolite is recommended as a support material of the second zeolite type catalyst for a better purification of HC and CO at lower gas temperature. MFI type zeolite may be replaced with β type zeolite or Y type zeolite (FAU type) to obtain a much better performance for purifying HC and CO. As for a support material of the first type catalyst, MFI type or β type is preferably applied for a far better capability of the catalyst in purifying HC and CO gas at lower temperature.

Second embodiment of the invention is a method for manufacturing the catalyst for purifying an exhaust gas. The method comprises the steps of (a) forming a first zeolite type catalyst where an active metal becomes carried on the zeolite through an ion-exchange process, (b) forming a second zeolite type catalyst where an active metal becomes supported on the zeolite by other process than ion-exchange, (c) producing a catalytic layer of the mixture of the first zeolite type catalyst and the second zeolite type catalyst. This is the method for making the catalyst disclosed in the first embodiment, where the catalyst has a layer having a mixture of the first type zeolite catalyst and the second type to obtain a better function of the catalyst at higher temperature.

Third embodiment of the invention is a method for manufacturing the catalyst for purifying an exhaust gas. The method comprises the steps of (a) forming a first zeolite type catalyst where an active metal becomes carried on the zeolite through an ion-exchange process, (b) forming a second zeolite type catalyst where an active metal becomes supported on the zeolite by other process than ion-exchange, (c) producing an inner catalytic layer including the second zeolite type catalyst, and (d) producing an outer catalytic layer including the first zeolite type catalyst on the inner catalytic layer. This is the method for making the catalyst disclosed in the first embodiment as another preferable catalyst, where the catalyst has a layered structure to obtain a better function of the catalyst at lower temperature.

The first zeolite type catalyst is prepared as follows; water is added to powdered zeolite to form a slurry and a noble metal is added to the slurry when it reached a predetermined temperature by heating. Then after the mixture of the slurry and a noble metal is maintained at the temperature for a given period of time, the mixture is washed , dried and calcined to form the first zeolite type catalyst on which the active metal is carried by ion-exchange. And the second zeolite type catalyst is prepared as follows; water and an active metal are added to powdered zeolite to form a slurry mixture and the mixture is heated to a predetermined temperature, after that the mixture is dried and calcined to form the second zeolite type catalyst.

Fourth embodiment of the invention is with respect to a gas purification method. In the method, the first type zeolite catalyst, which is made of zeolite bearing an active metal through ion-exchange process, converts paraffin type HC and/or olefin type HC which are easily oxidized into aromatic HC which is difficult to be oxidized at high exhaust gas temperature. And the second type zeolite catalyst, which is made of zeolite bearing an active metal through a process other than ion-exchange, can reduce NOx into $N_2$ by making use of the aromatic HC as a reductant remaining in the gas even at high temperature. Thus the high capability at high gas temperature of purifying NOx is obtained.

The above and other objects and features of the invention will be clearly understood from the following description directed to preferred embodiments of the invention when considered in conjunction with the accompanying drawings, in which:

FIG. 1 is a fragmentary cross-sectional view of an exhaust gas purification catalyst in accordance with an embodiment of the invention;

FIG. 2 is a fragmentary cross-sectional view of an exhaust gas purification catalyst according to another embodiment of the invention;

FIG. 3 is a schematic cross-sectional view of an emission control device in which the exhaust gas purification catalyst of the invention is installed;

FIG. 4 is a graph of a modifying rate of an olefin type HC to an aromatic type HC with respect to platinum content carried by the catalyst A of example I of the invention and a comparative example;

FIG. 5 is a graph of catalytic conversion efficiency for NOx in a temperature range of 250 - 300°C with respect to platinum content;

FIG. 6 is a graph of catalytic conversion efficiency for NOx in a temperature range of 250 - 300°C of the catalyst of example I and a comparative catalyst;

FIG. 7 is a graph of catalytic conversion efficiency for NOx in a temperature range of 250 - 300°C of a prior art catalyst;

FIG. 8 is a graph of T-50 temperature for HC and CO of the catalyst of example I and a comparative catalyst;

FIG. 9 is a graph of cracking rate of converting aromatic type HC into an olefin type HC with respect to platinum content of the catalyst of example II of the invention and a comparative catalyst;

FIG. 10 is a graph of T-50 temperature for HC with respect to platinum content of the catalyst of example II;

FIG. 11 is a graph of a catalytic conversion efficiency for NOx at a temperature range of 250 - 300°C of the catalyst of example II and a comparative catalyst;

FIG. 12 is a graph of T-50 temperature for HC and CO of the catalyst of example II;

FIG. 13 is a graph of T-50 temperature for HC and CO of a comparative catalyst;

FIG. 14 is a graph of T-50 temperature for HC and CO of the catalyst of the invention and a comparative catalyst;

FIG. 15 is a graph of a catalytic conversion efficiency for NOx in a temperature range of 250 - 300°C of the catalysts of the invention and a comparative catalyst;

FIG. 16 is a graph of T-50 temperature for HC and CO of a comparative catalyst;

FIG. 17 is a graph of catalytic conversion efficiency for NOx in a temperature range of 250 - 300°C of a comparative catalyst;

FIG. 18 is a graph of the dependency of catalytic conversion efficiency for NOx with respect to content ratio of platinum and iridium of a catalyst of example III of the invention;

FIG. 19 is a graph of the dependency of T-50 temperature for HC and CO with respect to content ratio of platinum and iridium; and

FIG. 20 is Table of average catalytic conversion efficiency for NOx in a lower exhaust gas temperature range of 150 - 300 °C and in a higher exhaust gas temperature range of 250 - 300°C, and average T-50 temperature for HC and CO, with respect to mixture ratio of first and second zeolite type catalysts.

<u>Example I</u>

As shown in FIG. 3, an apparatus 2 for purifying exhaust gas from automobile engine is installed in an exhaust pipe line. The apparatus 2 is packed with a catalyst 3 capable of purifying harmful emissions such as HO, CO and NOx by converting them into $H_2O$, $CO_2$ and $N_2$. The engine used in this example is of a lean-burn type which is called an "excess air combustion" engine in this specification, such as a diesel engine and a fuel direct injection engine, exhaust gas from which usually includes oxygen within the limit of approximately 4 - 25 %, but the invention is not limited to that. In a normal operating condition where excess air combustion takes place HC concentration of the exhaust gas is relatively low because of air in excess This means that there is not sufficient HC as a reductant to purify NOx produced more at higher gas temperatures and there is the tendency toward making it relatively difficult to purify NOx. Also exhaust gas temperature is usually as low as causing imperfect purification of HC and CO. Thus the catalyst 3 is required to be sufficiently active both at higher temperatures to purify NOx and at lower temperatures to purify HC and CO

As shown in FIG. 1, the catalyst 3 is composed of a honeycomb support 4 made up of cordierite with high thermal resistance and a single catalytic layer 5 supported on the honeycomb support 4. It is possible to use other materials instead of cordierite for the catalyst support and to form other catalytic layer on either or both outer and inner sides of the catalytic layer 5, if necessary. The catalytic layer 5 has a wash-coated structure in which a first zeolite type catalyst capable of modifying HC and a second zeolite type catalyst having an excellent NOx conversion efficiency are nearly homogeneously mixed with each other. One example of the weight ratio of the first catalyst and the second catalyst is 1:1.

The first zeolite type catalyst is comprised of zeolite and a small amount of platinum, which is one of active metals, carried by and dispersed in the zeolite by means of ion-exchange. The first type zeolite catalyst has a function to modify a paraffin type HC, which is easily oxidized, into aromatic HC, which is relatively difficult to be oxidized, in a high exhaust gas temperature range of 250 - 300 °C, while it has another function called cracking to modify a medium size of aromatic HC which is difficult to be oxidized into a small size olefin type HC which is easily oxidized in a low exhaust gas temperature range of 100 - 200°C. Hereinafter the first zeolite type catalyst is referred to as a "catalyst A".

As a type of zeolite support material, MFI-type, β -type and Y -type (FAU-type) may be used. MFI-type zeolite has pores nearly circular in cross-section , of which an average diameter is about 5Å, β-type zeolite has pores nearly oval in cross-section, of which the average major axis is about 7Å and Y-type zeolite has pores nearly circular in cross-section, of which an average diameter is about 7Å. Second type zeolite catalyst is comprised of zeolite and platinum carried on the zeolite by spray-dry process. The second type zeolite catalyst has a function to effectively convert NOx to $N_2$ at a high exhaust gas temperature and another function to effectively oxidize HC to $H_2O$ and $CO_2$ at a low exhaust gas temperature. As a zeolite support material of the second type catalyst, MFI-type, β-type and Y-type (FAU type) may be used. The second zeolite type catalyst is, hereafter, referred to as "catalyst B". In the catalyst 3, each impurity content of catalyst A and catalyst B is preferably under 1 % by weight.

The catalyst 3 was produced through the following steps

(1) Preparation of catalyst A

Zeolite was mixed with an appropriate amount of distilled water of 10-50 times the zeolite powder, for example 10 times, and then was heated. When the temperature of the zeolite mixture reached between 90 and 95 °C, for instance, 90°C, a predetermined amount of noble metal compound, such as a platinum complex salt or its solution, is added to the zeolite mixture and then is kept at that temperature for three hours. After that the zeolite mixture is washed, dried at about 150°C and calcined at an appropriate temperature between 200 and 500°C, for example 300°C, to provide the catalyst A.

(2) Preparation of catalyst B

A certain amount of zeolite powder, an appropriate amount of distilled water of 1 -50 times the zeolite powder, for example 10 times, and a predetermined amount of noble metal compound such as tetra-amine-platinum or its solution are mixed together at a room temperature 10 - 30°C without any temperature control as applied to the preparation of catalyst A. After that the mixture is dried by spray- dry method or other usual drying method and calcined at an appropriate temperature between 200 and 500°C, for example 300°C, to provide the catalyst B.

(3) Wash-coat of catalyst A and B

Catalyst A and catalyst B prepared by the process above are mixed at a predetermined weight ratio such as 1:1. A specified amount of binder such as hydrated alumina and an appropriate amount of distilled water are added to the mixture to make a slurry. A weight ratio of catalyst A and B relative to the binder is for instance 9 : 1. The catalyst slurry is wash-coated onto a monolithic support, and the wash-coated monolithic support was dried at a temperature of approximately 150°C and calcined at 500°C to make the catalyst 3 for purifying exhaust gas.

In the purifying catalyst 3, when the exhaust gas is at a higher temperature such as between 250 and 300°C, catalyst A makes a paraffin type HC or an olefin type HC modified to an aromatic HC which is relatively difficult to be oxidized. Because of its slow rate of being oxidized, the aromatic HC can survive in the high temperature gas. Then catalyst B can reduce NOx into $N_2$ by making use of the aromatic HC as a reductant remaining in the gas even at the high temperature. Thus the catalyst 3 gains, as a whole, a good capability of NOx conversion at high gas temperatures. In other words, in the catalyst 3, a temperature range for giving the highest NOx conversion efficiency is shifted to a higher temperature side by converting HC into aromatic HC which keeps a good capacity as a reductant and slow rate of oxidization at even high temperature.

At a low exhaust gas temperature such as 100 -200°C, catalyst A converts a medium size (medium carbon number) aromatic HC which is relatively difficult to be oxidized into a small size olefin type HC (cracking) and catalyst B rapidly oxidizes the small size olefin type HC to form $H_2$ and $CO_2$. Thus the catalyst 3 also has a good capability of HC conversion efficiency at lower gas temperatures.

Hereinafter the performance of the exhaust gas purifying catalyst 3 of the invention was measured and compared with that of a catalyst produced by a conventional method.

FIG. 4 is a graph of a conversion characteristic of an olefin type HC to an aromatic HC with respect to platinum content in catalyst A of the invention and two types of comparative catalysts prepared by conventional method. The catalyst A was comprised of MFI-type zeolite on which platinum was carried by ion-exchange and one of the two types of comparative catalysts was comprised of MFI- type zeolite on which platinum was carried by dry-solidified process, the other was comprised of alumina on which platinum was carried by dried -solidified process. In this measurement a simulated gas consisting of 1000 ppm propylene ( $C_3H_6$), 10 % oxygen ($O_2$) and the rest of helium (He) was used as an exhaust gas to be tested in a temperature range of 250 - 350°C. The graph shows that the conversion ratio is high in the range of 0.1 to 3.0 g/L of platinum content, in particular highest in the range of 0.2 to 1.0 g/L. A unit g/L used herein means the weight content of platinum per one liter of the catalyst.

FIG. 5 is a graph of a NOx conversion ratio in a temperature range of 250 - 300°C with respect to platinum content. A catalyst used here, the same type as the one shown in FIG. 1, has a catalytic layer 5 consisting of the catalyst A (zeolite on which platinum is supported by ion-exchange) and the catalyst B (MFI-type zeolite on which platinum is supported by spray-dry method) in the weight ratio of 1 : 1 and the platinum content of the catalyst B was kept constant at 2g/L during the test for the measurement. In this measurement a simulated gas contains 170 ppm propylene ($C_3H_6$), 170 ppm NOx, 200 ppm CO, 100ppm $SO_2$, 10% oxygen were used as an exhaust gas to be tested at a space velocity of 85,000/h.

As apparent from FIG. 5, the catalytic conversion ratio for NOx is high in a range of 1.1 to 1.5 g/L of platinum content. Platinum content of the catalytic layer 5 in this case is calculated by the following equation;

(Pt content of catalyst A + Pt content of catalyst B)/2.

If the platinum content of the catalyst C is 0,5 g/L and the platinum content of the catalyst D is 2 g/L (constant), the average platinum content of the catalysts 6 and 7 is 1.25 g/L.

FIG. 6 is a graph of a catalytic conversion ratio for NOx in a temperature range of 250-300°C with respect to carrier materials of catalyst B on which platinum is carried. A catalyst used here, the same type as the one shown in FIG. 1, has a catalytic layer 5 consisting of the catalyst A and the catalyst B in the weight ratio of 1 : 1 and platinum contents of the catalyst A and catalyst B were kept constant at 0.5g/L and 2g/L, respectively,during the test for the measurement. The measurement was made by using 2,000 $cm^3$ displacement turbo-charged diesel engine with direct fuel injection. In the graph $Al_2O_3$ (alumina) and $CeO_2$ (ceria) were used as comparative catalysts to the invention. As apparent from FIG. 6, the catalytic conversion ratio for NOx shows the highest for MFI-type zeolite and still higher for β-type zeolite and Y-type zeolite than for the comparative catalysts.

As disclosed in the aforementioned Japanese Unexamined Patent Publication N0.7 - 24326 or No.7 - 124476, the catalyst for purifying exhaust gas in which on the same zeolite particles are carried together with two types of active metals one of which becomes carried by ion-exchange and the other by a way other than ion-exchange

FIG. 7 is a graph of a catalytic conversion efficiency for NOx in a temperature range of 250 - 300°C in the case of using the prior art catalysts as comparative examples disclosed in the above mentioned publications. Test conditions for the measurement were similar to the ones in FIG. 6, the total platinum content of the catalyst was 1.25 g/L and the engine used was 2,000 $cm^3$ displacement turbo-charged diesel engine with direct fuel injection.

The prior art catalyst was prepared by the following steps; first a zeolite bearing platinum by ion-exchange was wash-coated onto a carrier. After the wash-coated carrier was dried and calcined, the wash-coat layer was impregnated with a platinum solution to make the platinum carried by the layer. Thus the catalyst for purifying an exhaust gas including zeolite particles on which platinum formed by ion-exchange and platinum formed by other process than ion-exchange coexist were obtained. By comparing FIG. 6 with FIG. 7 it becomes clear that the catalyst 3 of the embodiment I of the invention has much higher catalytic conversion ratio for NOx than that of the prior art catalyst in the case of using the same type zeolite carrier.

FIG. 8 is a graph of T-50 temperature for HC and CO of various catalysts. The other conditions for the measurement of T-50 were the same as those shown in FIG.6. The term "T-50 temperature"used herein shall mean and refer to the temperature of a catalytic converter at its entrance necessary for the catalyst to exhibit a catalytic conversion efficiency of 50 %, taking 100 % for complete elimination of harmful emission HC or CO. T-50 temperature can be an indicator for evaluating an activity of catalyst at lower temperatures, lower T-50 temperatures mean that the catalyst has a higher activity at lower temperatures. As apparent from FIG. 8, T-50 temperature is lower for β-type zeolite and Y-type zeolite as a carrier of the catalyst B. It is believed that HC and CO having a relatively higher molecule diameter are easily captured by the β-type zeolite or Y- type zeolite because they have relatively large pore diameters.

Example II

In this example, the only diffecence from the example I is a catalyst 3' packed in the exhaust gas purifying apparatus 2 in FIG. 3 As shown in FIG. 2, the catalyst 3' is comprised of a honeycomb support 4 made up of cordierite with high thermal resistance, an inner catalytic layer 6 carried on the honeycomb support 4 and an outer catalytic layer 7 formed on the inner catalytic layer 6. It is possible for the honeycomb support 4 to use other materials instead of cordierite, if necessary. Catalyst 3' has an outer layer 7 including first zeolite type catalyst capable of converting HC into other type of HC and an inner layer 6 including second zeolite type catalyst which has high performance of oxidizing HC and CO and purifying NOx. One example of the weight ratio of the first catalyst and the second catalyst is 1:1. The catalytic layer 5 has wash-coated structure in which first zeolite type catalyst being capable of converting HC into other type of HC is nearly homogeneously mixed with second zeolite type catalyst which has catalytic conversion performance for NOx. One example of the weight ratio of the first catalyst and the second catalyst is 1:1.

Same as in Example I, the first zeolite type catalyst is comprised of zeolite and a small amount of platinum, one of active metals, which is carried on the zeolite in highly dispersed state through ion-exchange. The first zeolite type catalyst has a function to convert a paraffin type HC and/or an olefin type HC, which are easily oxidized, into aromatic HC, which is relatively difficult to be oxidized, in a high exhaust gas temperature range of 250 - 300 °C, while it has another function called cracking to convert a medium size (medium carbon number) aromatic HC, which is difficult to be oxidized, into a small size olefin type HC, which is easily oxidized, in a low exhaust gas temperature range of 100-200°C. Hereinafter in example II the first zeolite type catalyst or the outer catalytic layer 7 is referred to as "catalyst C". MFI-type, β-type and Y- type (FAU-type) zeolite, for example, can be used as another carrier material of catalyst C. The second zeolite type catalyst consists of zeolite and platinum which is carried on the zeolite by spray-dry process. The second type zeolite catalyst has a function to effectively reduce NOx to $N_2$ at higher exhaust gas temperatures, while it has another function to effectively oxidize HC to form $H_2O$ and $CO_2$ at lower temperatures. As a type of zeolite carrier material of the second type catalyst, MFI-type, β-type and Y-type (FAU-type) can be used. Hereinafter in example II the second zeolite type catalyst or the inner catalytic layer 6 is referred to as "catalyst" D". In the catalyst 3', each impurity content of catalyst C and catalyst D are preferably under 1 % by weight.

The catalyst 3' was prepared in the following manner.

(1) Preparation of catalyst C ( zeolite on which platinum is supported by ion-exchange)

An appropriate amount of distilled water 10-50 times the zeolite powder, for example 10 times, was added thereto and the mixture was heated. When the temperature of the mixture reached between 90 and 95 °C, for instance, 90°C, a predetermined amount of a noble metal compound, such as Pt-amine complex salt or complex salt solution, was added to the mixture and then it was kept at that temperature for 3 hours. After that the mixture was washed, dried at about 150°C and calcined at an appropriate temperature between 200 and 500°C, for example 300°C, to provide the catalyst C

(2) Preparation of catalyst D (zeolite on which Pt is supported by dry-solidified method)

A certain amount of zeolite powder, an appropriate amount of distilled water 1 - 50 times the zeolite powder, for example 10 times, and a predetermined amount of a noble metal compound such as dinitro-diamine-platinum ($Pt(NO_2)_2(NH_3)_2$) or its solution were mixed and the mixture was heated over 100°C . After that, the mixture was dried by spray- dry method or other usual drying manner and calcined at an appropriate temperature between 200 and 500°C, for example 300°C, to provide the catalyst D.

(3) Wash-coat of inner catalytic layer including catalyst D

Catalyst D prepared by the above process (2) was mixed with binder such as hydrated alumina at a predetermined weight ratio such as 9:1 to prepare a mixture. An appropriate amount of distilled water was added to the mixture to make a slurry. Then the slurry is wash-coated on a monolithic support 4 and the wash-coated monolithic support 4 was dried at approximately 150°C and calcined at 500°C to make the inner catalytic later 6 (base coat).

(4) Wash-coat of outer catalytic layer including catalyst C

Catalyst C prepared by the above process (1) was mixed with binder such as hydrated alumina at a predetermined weight ratio such as 9:1 to prepare a mixture. An appropriate amount of distilled water was added to the mixture to make a slurry. Then the slurry was wash-coated on the inner catalytic layer 6 formed on the monolithic support 4 and the wash-coated monolithic support 4 with the slurry on the inner catalytic layer 6 was dried at approximately 150°C and calcined at 300°C to make the outer catalytic layer 7 (over-coat) on the inner catalytic later 6 (base-coat). Thus the double layered catalyst 3' was provided.

At lower exhaust gas temperatures such as 100-200°C, in such a structure of the catalyst 3', the outer catalytic later 7 including catalyst C converts a medium size (medium carbon number) aromatic HC, which is relatively difficult to be oxidized, into a small size olefin type HC, which is easy to be oxidized, (cracking ) and the inner catalytic layer 6 including catalyst D rapidly oxidizes the small size olefin type HC to form $H_2O$ and $CO_2$. Thus the catalyst 3' also has a good capability of purifying HC at lower gas temperature. When the exhaust gas is at a higher temperature such as between 250 and 300°C, the outer catalytic later 7 including catalyst C makes a paraffin type HC or an olefin type HC converted into an aromatic HC which is relatively difficult to be oxidized. Because of its slow rate of being oxidized, the aromatic HC can survive in the high temperature gas. Then the inner catalytic later 6 including catalyst D can reduce NOx into $N_2$ by making use of the aromatic HC as a reductant remaining in the gas even at high temperatures. Thus the catalyst 3 obtains, as a whole, a good capability of NOx conversion at high gas temperatures.

Hereinafter the performance of the catalyst 3' of the invention for purifying exhaust gas was measured and compared with that of a catalyst produced by a conventional method.

FIG. 9 is a graph of a cracking ratio of HC (a ratio of converting an aromatic HC into an olefin type HC ) with respect to platinum content for the catalyst C of the invention which consists of MFI-type zeolite on which platinum was carried by ion-exchange and a comparative example which consists of MFI-type zeolite on which Pt was carried by dry-solidified process. In this measurement a simulated gas consisting of 1000 ppm toluene ($C_7H_8$), 10% oxygen and the rest of helium (He) were used as an exhaust gas to be tested at the temperature of 150 - 200°C which is corresponding to the low loaded conditions of engine. The graph shows that the cracking rate by the catalyst C is high in the range of 0.1 to 1.5 g/L of Pt content, in particular highest in the range of 0.2 to 1.0 g/L.

FIG. 10 is a graph of T-50 temperature for HC with respect to platinum content of the catalyst 3'. The weight ratio of the catalyst C to the catalyst D in the catalyst 3' was 1 : 1. The catalyst D consisted of MFI-type zeolite on which platinum was carried and had a platinum content was 2 g/L. In this measurement a simulated gas consisted of 200 ppm toluene ($C_7H_8$), 170 ppm NOx, 200 ppm CO, 10 % oxygen were used as an exhaust gas to be tested at a space velocity of 85,000 /h.

As apparent from FIG. 10, T-50 temperature for HC is lower in the range of 1.1 to 2.0 g/L of platinum content. In other words, oxidizing capability or low temperature activity of the catalyst 3' is higher in that range. Platinum content of the catalyst 3' in this case is calculated by the following equation;

(Pt content of catalyst C + Pt content of catalyst D)/2.

FIG. 11 is a graph of catalytic conversion efficiency of the catalyst 3' for NOx in a temperature range of 250 - 300°C with respect to different carriers of catalyst D. Platinum contents of the catalyst C and catalyst D were kept constant at 0.5 g/L and 2g/L respectively (i.e. an average platinum content of the catalyst 3' was 1.25 g/L according to the above equation) during the test for the measurement. The measurement was made by using 2,000 $cm^3$ displacement turbocharged diesel engine with direct fuel injection. In the graph alumina ($Al_2O_3$) and ceria ($CeO_2$) were used as comparative catalysts to the invention.

FIG. 12 is a graph of T-50 temperature for HC and CO with respect to carriers of catalyst D. The other conditions for the measurement of T-50 were shown in FIG.12.

Apparent from FIGs. 11 and 12, it is understood that T-50 temperature for HC or CO is lower for β-type zeolite and Y-type zeolite of carrier material of catalyst D, in other words, oxidizing capability or low temperature activity of the catalyst 3' is higher with those support materials,while the purification rate of NOx at higher gas temperature is the highest in MFI-type zeolite.

Hereinafter the results of the measurements are compared among the catalyst 3 of example I, the catalyst 3' of example II and the conventional catalysts as comparative examples.

FIG. 13 is a graph of T-50 temperature for HC and CO versus kinds of carrier material with respect to the conventional catalysts. The conventional catalysts had a single catalytic layer including MFI-, β- and Y- zeolite on which platinum was supported by spray-dry with 1.25 g/L platinum content. The other conditions for the measurement of T-50 are shown in FIG.13.

FIG. 13 shows that any conventional catalysts have a higher T-50 temperature that means a low activity of catalyst at lower temperature.

FIG. 14 is a graph of T-50 temperature for HC and CO versus kinds of catalysts to which β-type zeolite on which platinum is supported by ion-exchange is common. In FIGs. 14 and 15, the term "single-type" used means a catalyst of comparative example having a single catalytic layer consisting of only a β-type zeolite on which platinum is supported by ion-exchange, the term "mixture type" means a catalyst of example I having a single catalytic layer consisting of a mixture of a β-type zeolite on which platimum is supported by ion-exchange and a zeolite on which platinum is supported by dry-solidified, and the term "layered type" means a catalyst of example II having an inner catalytic layer consisting of a zeolite on which platinum is supported by dry-solidified and an outer catalytic layer consisting of a β-type zeolite on which platinum is supported by ion-exchange. In the measurement of T-50 temperature, MFI-type, β-type and Y-type were used as a carrier of zeolite on which platinum is supported by dry-solidified.

As apparent from FIG. 14, T-50 temperature for HC and CO is low when the β -type or Y-type zeolite is used as a carrier on which platinum is supported by dry-solidified in both the mixture type and the layered type, and is still much lower than that of the single type even when the MFI-type zeolite is used as a carrier on which platinum is supported by dry-solidified.

FIG. 15 is a graph of a catalytic conversion ratio for NOx in an exhaust gas temperature range of 250 - 300°C with respect to various kinds of catalysts to which b-type zeolite on which platinum is supported by ion-exchange is common. In the measurement of the catalytic conversion ratio for NOx, MFI-type, β-type and Y-type zeolite were used as a carrier on which platinum is supported by dry-solidified. In FIG. 15, $a_1$ and $a_2$ mean a catalytic conversion ratio for NOx in the case that MFI-type zeolite is used as a carrier on which platinum is supported both by ion-exchange and by dry-solidified, respectively.

As apparent from FIG. 15, the catalytic conversion efficiency for NOx is high when MFI-type zeolite is used as a carrier on which Pt is supported by dry-solidified in both the mixture type and the layered type.

FIG. 16 is a graph of T-50 temperature for HC and CO versus kinds of carrier of a catalyst of comparative example having a single catalytic layer consisting of only a zeolite on which platinum is supported by ion-exchange, where the platinum content is kept constant at 0.5 g/L. The other conditions for the measurement of T-50 are shown in FIG.16.

As apparent from FIG. 16, T-50 temperature for HC and CO is high with respect to any type of samples of the comparative examples, which means the catalyst activity at low temperature is low.

FIG. 17 is a graph of a catalytic conversion efficiency for NOx in a gas temperature range of 250 - 300°C with respect to kinds of carrier of a catalyst of the comparative example having a single catalytic layer consisting of only a zeolite on which platinum is supported by ion-exchange, where the platinum content is kept constant at 0.5 g /L. The other conditions for the measurement of the catalytic conversion efficiency for NOx are shown in FIG.17.

As apparent from FIG. 17, the catalytic conversion efficiency for NOx is low with respect to any type of samples of the comparative catalysts.

As set forth above, the catalysts 3 and 3' of the invention can improve catalytic conversion efficiency for both NOx in a higher gas temperature range and for HC and CO in a lower gas temperature range.

## Example III

An exhaust purifying apparatus 2 is installed in the exhaust system 1 in which a catalyst 3 (3') is packed as shown in FIG. 3. All these exhaust system 1, exhaust gas purifying apparatus 2 and catalyst 3(3') are basically the same in structure and function as those in previous Examples I and II. However, platinum and iridium are employed as an active metal (noble metal) in place of platinum in the previous Examples I and II. Rhodium may be employed as an active metal.

The catalyst 3 (3') is comprised of first zeolite type catalyst in which an active metal is carried on zeolite by ion-exchange and second zeolite type catalyst in which carried on zeolite by spray-dry process. The first zeolite type catalyst is comprised of zeolite and a small amount of platinum which is carried on the zeolite in highly dispersed state through ion-exchange. The first zeolite type catalyst has, on one hand, a cracking function to convert a large size HC (the number of carbons is 13 - 20 per one molecule of HC) to a small size HC (the number of carbons is 2 - 5 per one molecule of HC) or a medium size HC (the number of carbons is 6 - 12 per one molecule of HC) in a lower exhaust gas temperature range of 100 - 200°C and, on the other hand, a function to polymerize a small size HC to a medium size HC in a higher exhaust gas temperature range of 250 - 300°C. Zeolite for the first zeolite type catalyst may of MFI-type, β-type, or Y-type (FAU-type). The second zeolite type catalyst has a function to effectively convert NOx to $N_2$ in both lower and higher gas temperature ranges as well as a function to oxidize HC to $H_2O$ or $CO_2$ in especially a lower gas temperature range. Zeolite for the second zeolite type catalyst may of MFI-type, β-type, or Y-type (FAU-type).

The first and second zeolite type catalysts are manufactured by the same manner as for first and second Examples I and II, excepting the utilization of iridium in addition to platinum as an active metal. As will be described later, while the exhaust gas purification catalyst 3(3') is favorable to be of the mixture type, the first and second zeolite type catalysts may be of a separate type in which they are in separate catalytic layers or of an in-line type in which they are separated into front and rear catalytic blocks.

In connection of the utilization of platinum and iridium as an active metal, it is of great importance that what ratio of platinum and iridium is most suitable for the second zeolite type catalyst and what mixture ratio of the first and second type zeolite catalysts is most suitable.

In order to reveal the most suitable ratio of platinum and iridium for the second zeolite type catalyst and the most suitable mixture ratio of the first and second type zeolite, measurements were made to find the dependency of catalytic conversion ratio on platinum and iridium ratio and mixture ratio.

The utilization was made of the following simulated gas:

| | |
|---|---|
| $HC(C_3H_6)$ | : 1700ppmC |
| NOx | : 200ppm |
| $CO_2$ | : 2% |
| $SO_2$ | : 100ppm |
| $N_2$ | : the remainder |
| SV | : 85000/h |

The catalytic conversion efficiency was measured with the simulated gas varying in temperature from 100 to 400°C. In the measurements the utilization was made of the MFI-type zeolite excepting otherwise referred. The amount of wash-coated catalyst was 30 weight % of a honeycomb support 4. Accordingly, when the consistency of the honeycomb support is 450 g/L, the wash-coated amount of catalyst is 135 g/L.

FIG. 18 shows the result of measurements of average catalytic conversion efficiency for NOx with respect to ratios of platinum relative to the total amount of active metal (platinum and iridium) in the second zeolite type catalyst while the exhaust gas temperature changes from 150 to 250°C and from 250 to 300°C.

FIG. 19 shows the result of measurements of T-50 temperature for HC and CO with respect to ratios of platinum relative to the total amount of active metal (platinum and iridium) in the second zeolite type catalyst.

The second zeolite type catalyst contained platinum and iridium whose total content was fixed at 3 g/L with respect to 30 weight % of wash-coated catalyst and the ratio of platinum and iridium was changed within the fixed total content. The first zeolite type catalyst contained platinum whose content was fixed at 3 g/L with respect to 30 weight % of wash-coated catalyst. The mixture ratio of first and second zeolite type catalysts was fixed at 1 : 1. The noble metal content with respect to 30 weight % of wash-coated catalyst is the amount of noble metal contained in the catalyst when wash-coating 30 weight % of the zeolite type catalysts only.

As apparent from FIGs. 18 and 19, the low temperature catalytic conversion efficiency ($C_{150-200}$) and the high temperature catalytic conversion efficiency ($C_{250-300}$) for NOx and the T-50 temperature for HC and CO are relatively favorable for the ratio of platinum content relative to the total content of noble metal between 1/4 and 1. They are excellent for the ratio between 1/2 and 3/4. Accordingly, it is desirable to set the ratio of platinum content relative to the total content of noble metal between 1/4 and 1 and more preferably between 1/2 and 3/4.

FIG. 20 is a table showing average low temperature catalytic conversion efficiency ($C_{150-200}$), average high temperature catalytic conversion efficiency ($C_{250-300}$) for NOx and average T-50 temperature for HC and CO with respect to various weight ratios of the first and second zeolite type catalyst. In the table, catalyst A contains 0.5g/L platinum carried by zeolite and catalyst B contains 3 g/L platinum and iridium at a ratio of 1 : 1 carried by zeolite. Mixture type I has catalysts A and B mixed in a single catalyst layer; layered type I comprises an outer layer of catalyst A and an inner layer of catalyst B; layered type II comprises an outer layer of catalyst B and an inner layer catalyst A; the in-line type comprises a front block of catalyst B and a rear block of catalyst A; mixture type II has a catalyst B containing Pt - Ir/$b_{25}$, and mixture type III has a catalyst B containing Pt - Ir/$USY_{30}$. The catalyst A is the first zeolite type catalyst, and the catalyst B is the second zeolite type catalyst.

The second zeolite type catalyst contained platinum and iridium whose total content was fixed at 3 g/L with respect to 30 weight % of wash-coated catalyst and the weight ratio of platinum and iridium was fixed at 2 : 1. The first zeolite type catalyst contained platinum whose content was fixed at 0.5 g/L with respect to 30 weight % of wash-coated catalyst. The mixture ratio of first and second zeolite type catalysts was fixed at 1 : 1. The noble metal content with respect to 30 weight % of wash-coated catalyst is the amount of noble metal contained in the catalyst when wash-coating 30 weight % of the zeolite type catalysts only. In the mixture type II β-type zeolite is used, and in the mixture type III Y-type zeolite (USY-type zeolite) is used.

As revealed from the table the exhaust gas purifying catalyst of the mixture type I having first and second MFI zeolite type catalysts mixed in a single catalyst layer shows excellent high and low gas temperature catalytic conversion efficiency for NOx and excellent T-50 temperature for HC and CO in a range of mixture ratio in weight of first and second zeolite type catalysts between 2 : 1 and 1 : 1. The exhaust gas purifying catalyst of the layered type, the in-line type, the mixture type II or the mixture type III shows good catalytic conversion performance and good T-50 temperature. Accordingly, the exhaust gas purifying catalyst of the invention which contains platinum and iridium employs any one of the mixture type, the layered type and the in-line type with the same results. Further, the zeolite may be of any type other than MFI-type.

## Claims

1. An exhaust gas purifying catalyst for purifying an exhaust gas containing hydrocarbons and nitrogen oxides, wherein said catalyst contains a catalytic component which yields a hydrocarbon having a medium number of carbons by cracking a hydrocarbon having a large number of carbons when an exhaust gas to be treated by the catalyst is in a lower temperature range and vice versa when said exhaust gas is in a higher temperature range, and reduces a nitrogen oxide with the use of a hydrocarbon having a medium number of carbons yielded through one of cracking and polymerization.

2. The purifying catalyst as defined in claim 1, wherein the catalytic component is comprised of a first catalytic component which yields a hydrocarbon having a medium number of carbons by cracking a hydrocarbon having a large number of carbons when an exhaust gas to be treated by the catalyst is in said lower temperature range and yields a hydrocarbon having a small number of carbons by polymerizing hydrocarbons having a medium number of carbons when said exhaust gas is in said higher temperature range and a second catalytic component which reduces a nitrogen oxide with the use of said hydrocarbon having a medium number of carbons yielded by said first catalytic component.

3. An exhaust gas purifying catalyst for purifying an exhaust gas containing hydrocarbons and nitrogen oxides, wherein said catalyst contains a catalytic component which yields an unsaturated hydrocarbon from a saturated hydrocarbon contained in an exhaust gas to be treated by the catalyst and reduces a nitrogen oxide by the use of said unsaturated hydrocarbon.

4. The exhaust gas purifying catalyst as defined in claim 3, wherein said catalytic component is comprised of a first catalytic component which yields an unsaturated hydrocarbon from a saturated hydrocarbon contained in said exhaust gas and a second catalytic component which reduces a nitrogen oxide with the use of said unsaturated hydrocarbon yielded by said first catalytic component.

5. An exhaust gas purifying catalyst according to claims 1 or 2, comprised of a zeolite type catalyst having zeolite and an active metal carried by said zeolite for purifying an exhaust gas containing hydrocarbons and nitrogen oxides, wherein said zeolite type catalyst is comprised of a first zeolite type catalytic component which contains an active metal carried by zeolite by means of an ion-exchange process and a second zeolite type catalytic component which contains an active metal carried by zeolite by means of a physical process.

6. The exhaust gas purifying catalyst as defined in anyone of claims 1, 2 and 5, wherein said first and second zeolite catalytic components are dispersed in a single catalyst layer.

7. The exhaust gas purifying catalyst as defined in anyone of claims 1, 2 and 5, wherein said catalyst is comprised of an inner catalyst layer and an outer catalyst layer disposed over said inner catalyst layer, said first zeolite type catalytic component being contained in said outer catalyst layer and said second zeolite type catalytic component being contained in said inner catalyst layer.

8. The exhaust gas purifying catalyst as defined in anyone of claims 1, 2 and 6, wherein said second zeolite type catalytic component is comprised of an MFI-type of zeolite.

9. The exhaust gas purifying catalyst as defined in anyone of claims 1, 2 and 6, wherein said second zeolite type catalytic component is comprised of one of a β-type of zeolite and an Y-type (FAU-type) of zeolite.

10. The exhaust gas purifying catalyst as defined in anyone of claims 1, 2 and 7, wherein said first zeolite type catalytic component is comprised of an MFI-type of zeolite.

11. The exhaust gas purifying catalyst as defined in any one of claims 1, 2, 7 and 9, wherein said first zeolite type catalytic component is comprised of β-type of zeolite.

**12.** The exhaust gas purifyinq catalyst as defined in any one of claims 1, 2, 7 and 9, wherein said second zeolite type catalytic component is comprised of an MFI-type of zeolite.

**13.** The exhaust gas purifying catalyst as defined in anyone of claim 1, 2 and 7 wherein said second zeolite type catalytic component is comprised of an β-type of zeolite.

**14.** The exhaust gas purifying catalyst as defined in anyone of claims 1, 2 and 7, wherein said second zeolite type catalytic component is comprised of an MFI-type of zeolite.

**15.** The exhaust gas purifying catalyst as defined in any one of claims 1, 2, 8 and 13, wherein said first zeolite type catalytic component is comprised of one of an MFI-type of zeolite and a β-type of zeolite.

**16.** The exhaust gas purifying catalyst as defined in any one of claims 1, 2, 5 and 15, wherein said active metal is comprised of a noble metal.

**17.** The exhaust gas purifying catalyst as defined in anyone of claims 1, 2 and 16, wherein said noble metal is at least one of platinum, iridium and rhodium.

**18.** The exhaust gas purifying catalyst as defined in anyone of claims 1, 2 and 17, wherein said first zeolite type catalytic component contains platinum as said noble metal and said second zeolite type catalytic component contains platinum and iridium as said noble metal, a ratio of said platinum in said second zeolite type catalytic component relative to a total weight of said noble metals is between 1/4 and 1.

**19.** The exhaust gas purifying catalyst as defined in anyone of claims 1, 2 and 18, wherein said ratio of platinum in said second zeolite type catalytic component is between 1/2 and 3/4.

**20.** A process of producing an exhaust gas purifying catalyst, characterized by the steps of:

producing a first zeolite type catalytic component by carrying an active metal on zeolite by means of ion-exchange;

producing a second zeolite type catalytic component by carrying an active metal on zeolite by means of a way other than ion-exchange; and

forming a catalyst layer containing said first and second zeolite type catalytic components mixed with each other therein.

**21.** A process of producing an exhaust gas purifying catalyst, characterized by the steps of:

producing a first zeolite type catalytic component by carrying an active metal on zeolite by means of ion-exchange;
producing a second zeolite type catalytic component by carrying an active metal on zeolite by means of a way other than ion-exchange;
forming an inner catalyst layer containing said first zeolite type catalytic component; and
forming an outer catalyst layer containing said second zeolite catalytic component over said inner catalyst layer.

**22.** The process of producing an exhaust gas purifying catalyst as defined in any one of claims 20 and 21, wherein said first zeolite catalytic component is produced by heating a first mixture of zeolite powders with water to a specified first temperature, holding said mixture added with a noble metal at said specified temperature for a specified period of time, and baking said mixture after washing and drying, and said second zeolite catalytic component is produced by heating a second mixture of zeolite powders with a noble metal and water to a specified second temperature and baking said mixture after drying.

**23.** A process of purifying an exhaust gas containing a hydrocarbon and a nitrogen oxide by an exhaust gas purifying catalyst, characterized by the steps of:

converting said hydrocarbon by a first zeolite type catalytic component which carries a noble metal on zeolite by means of ion-exchange;

reducing said nitrogen oxide with the use of said hydrocarbon after conversion by a second zeolite type catalytic component which carries an active metal on zeolite by means of a way other than ion-exchange.

**24.** A process of producing an exhaust gas purifying catalyst, characterized by the steps:

producing a first zeolite type catalytic component by carrying an active metal on zeolite by means of ion-exchange;
producing a second zeolite type catalytic component by carrying an active metal one zeolite by means of a way other than ion-exchange; and
forming a catalyst layer of said first and second zeolite type catalytic components contained therein.

FIG. 1

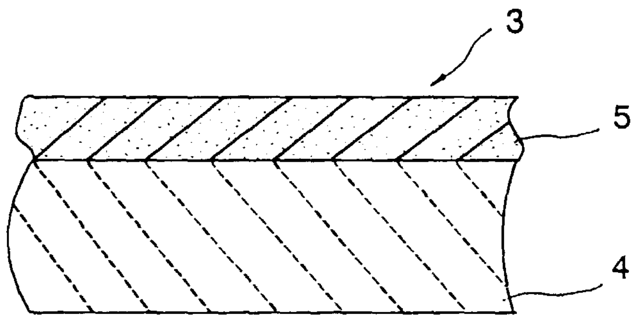


FIG. 2

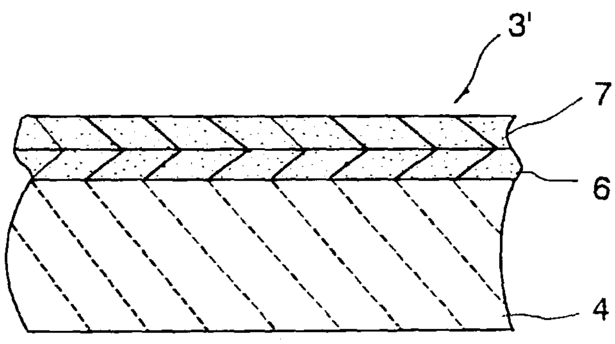


FIG. 3

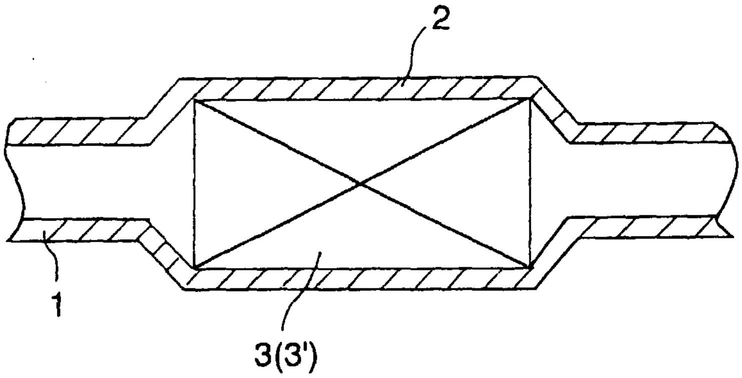

FIG.4

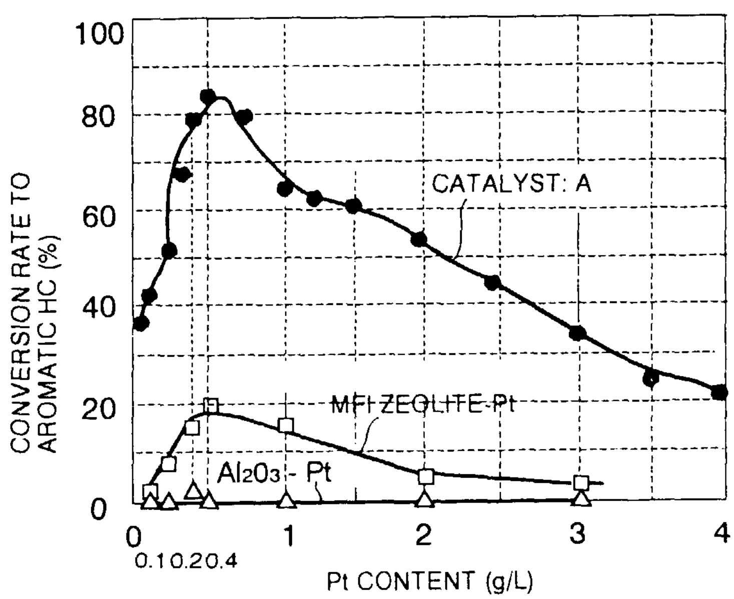
CONVERSION RATE TO AROMATIC HC (%)
100
80
60
40
20
0
CATALYST: A
MFI ZEOLITE-Pt
Al2O3 - Pt
0
1
2
3
4
0.1 0.2 0.4
Pt CONTENT (g/L)

FIG. 5

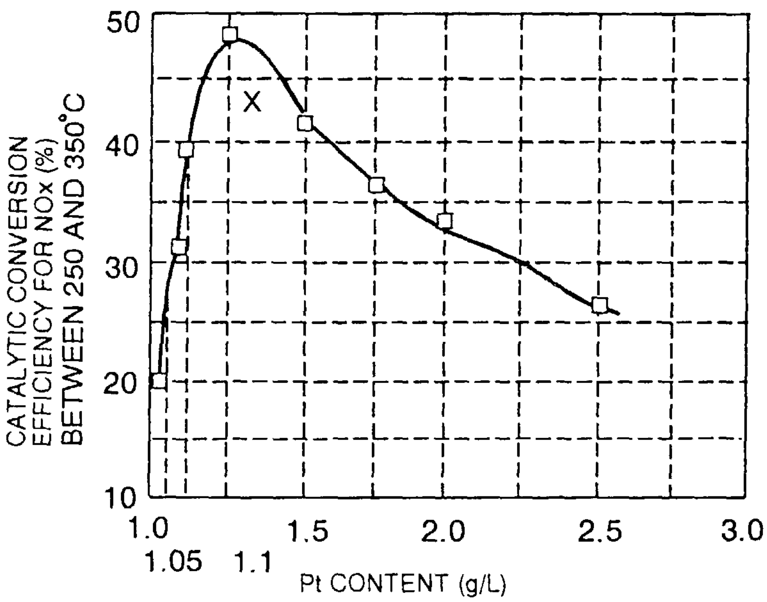


GAS COMPONENT:

HC(C3H6) = 170ppm NOx = 170ppm
CO = 200ppm SO2 = 100ppm
C2 = 10% SV = 85000/h

FIG. 6

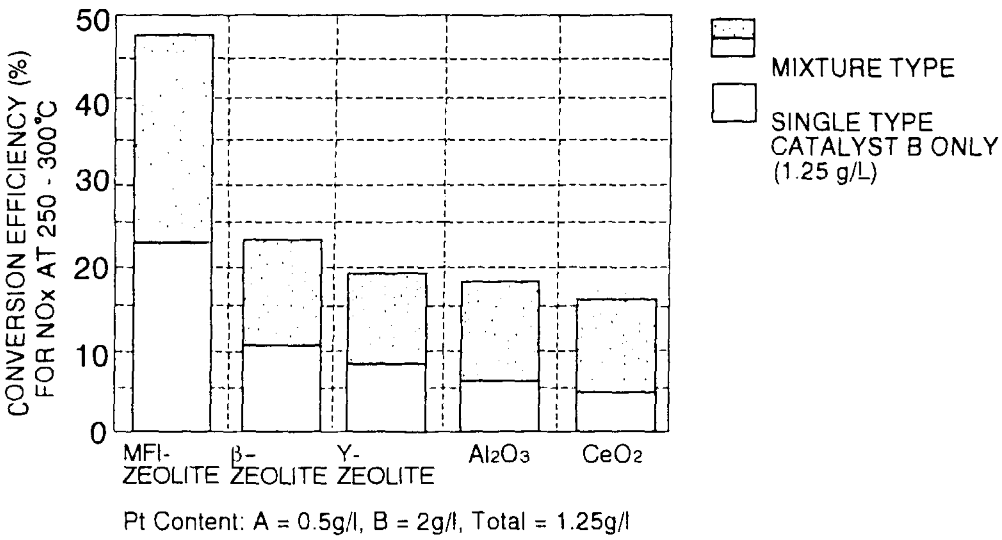
CONVERSION EFFICIENCY (%) FOR NOx AT 250 - 300°C
50
40
30
20
10
0
MFI-ZEOLITE
β-ZEOLITE
Y-ZEOLITE
Al2O3
CeO2
MIXTURE TYPE
SINGLE TYPE CATALYST B ONLY (1.25 g/L)
Pt Content: A = 0.5g/l, B = 2g/l, Total = 1.25g/l

FIG. 7

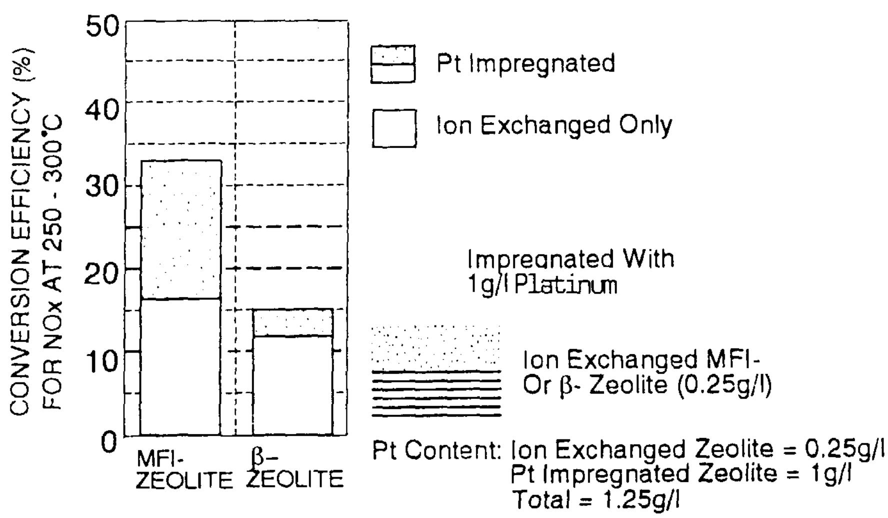
CONVERSION EFFICIENCY (%) FOR NOx AT 250 - 300°C
50
40
30
20
10
0
MFI-ZEOLITE
β-ZEOLITE
Pt Impregnated
Ion Exchanged Only
Impregnated With 1g/l Platinum
Ion Exchanged MFI- Or β- Zeolite (0.25g/l)
Pt Content: Ion Exchanged Zeolite = 0.25g/l
Pt Impregnated Zeolite = 1g/l
Total = 1.25g/l

FIG. 8

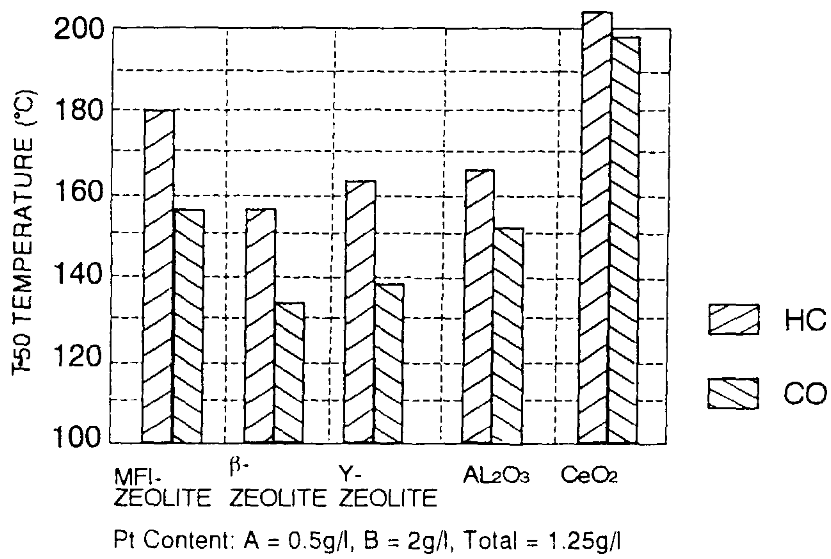
T-50 TEMPERATURE (°C)
200
180
160
140
120
100
HC
CO
MFI-ZEOLITE
β-ZEOLITE
Y-ZEOLITE
AL2O3
CeO2
Pt Content: A = 0.5g/l, B = 2g/l, Total = 1.25g/l

FIG. 9

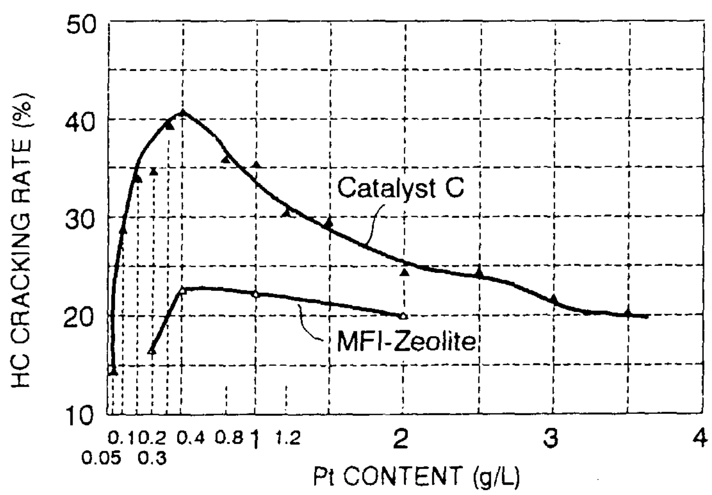
HC CRACKING RATE (%)
50
40
30
20
10
Catalyst C
MFI-Zeolite
0.1 0.2 0.4 0.8 1 1.2 2 3 4
0.05 0.3
Pt CONTENT (g/L)

FIG. 10

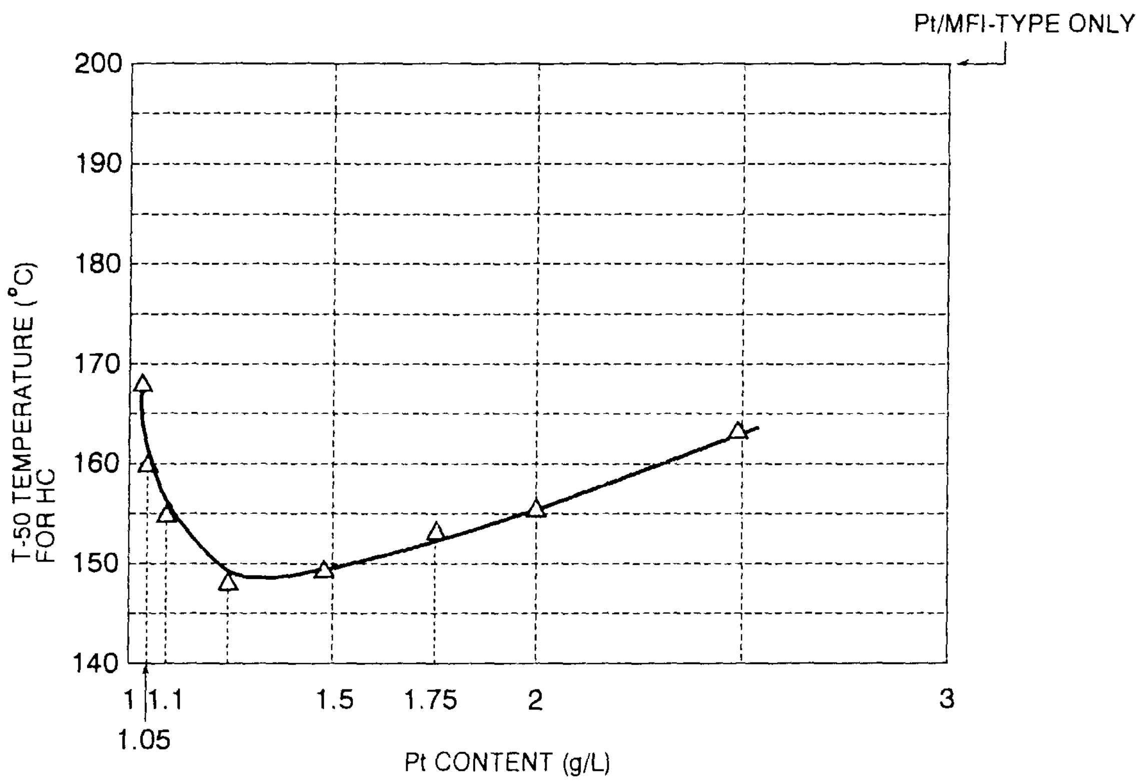
Pt/MFI-TYPE ONLY
200
190
180
170
160
150
140
T-50 TEMPERATURE (°C)
FOR HC
1
1.1
1.5
1.75
2
3
1.05
Pt CONTENT (g/L)

FIG. 11

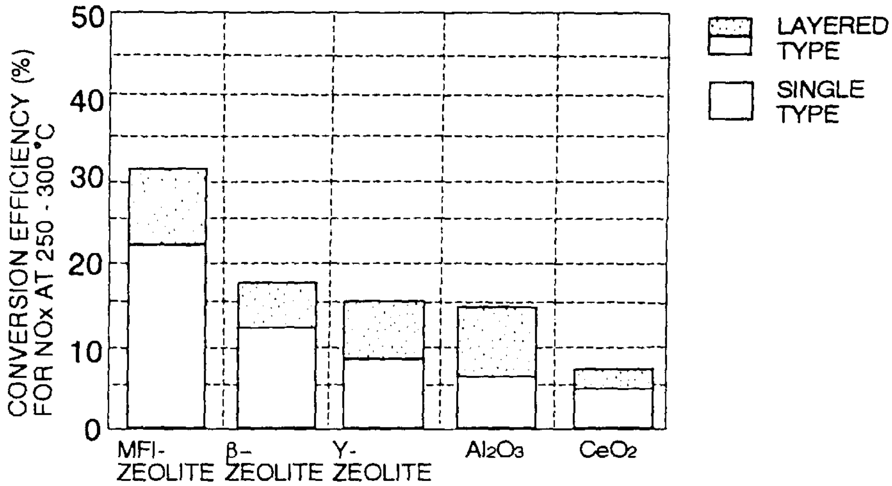


Pt Content: A = 0.5g/l, B = 2g/l, Total = 1.25g/l

FIG. 12

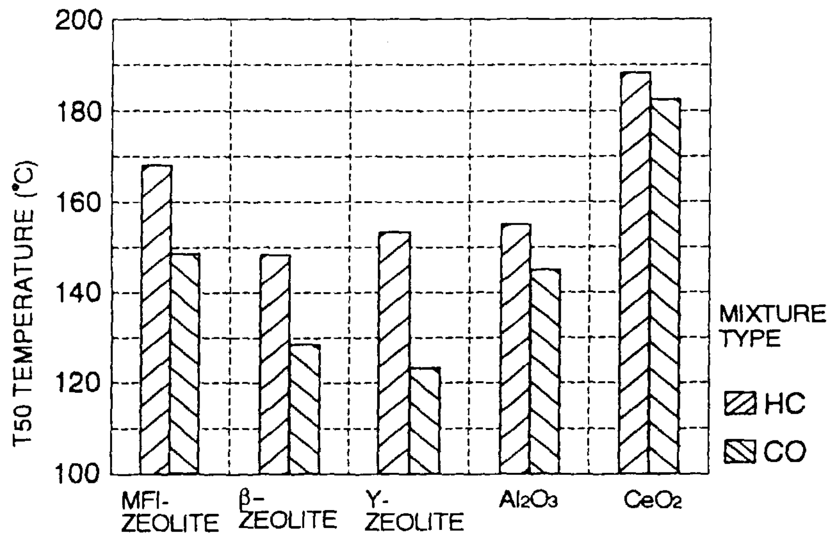


Pt Content: A = 0.5g/l, B = 2g/l, Total = 1.25g/l

FIG. 13

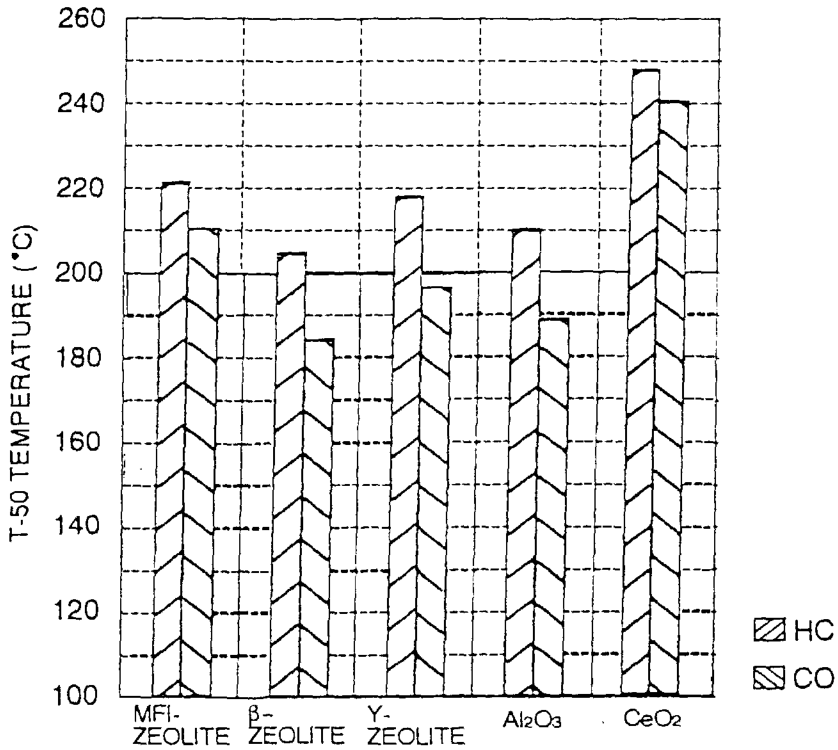


SPRAYED-DRY PROCESS
(Pt CONTENT: 1.25 g/L)

FIG. 14

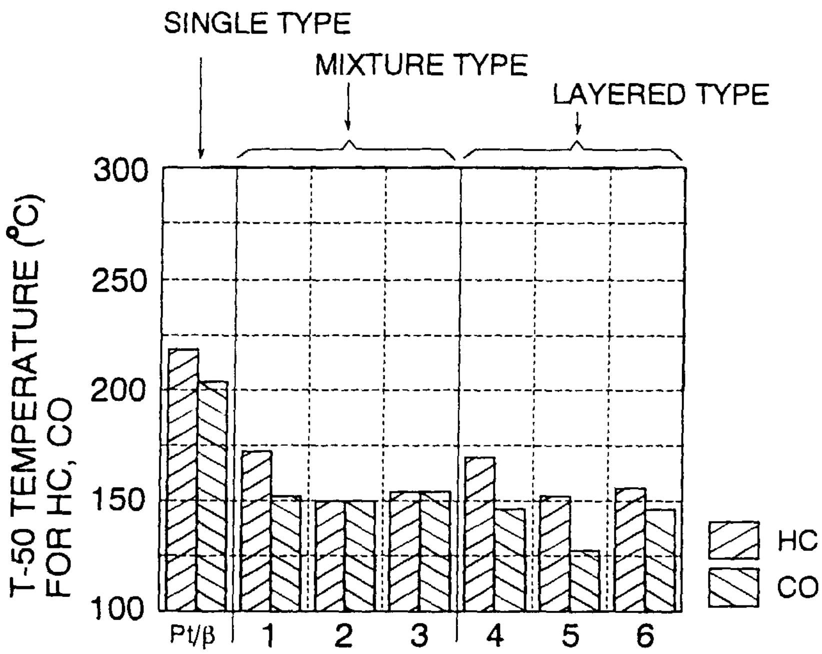
SINGLE TYPE
MIXTURE TYPE
LAYERED TYPE
T-50 TEMPERATURE (°C)
FOR HC, CO
300
250
200
150
100
Pt/β
1
2
3
4
5
6
HC
CO

FIG. 15

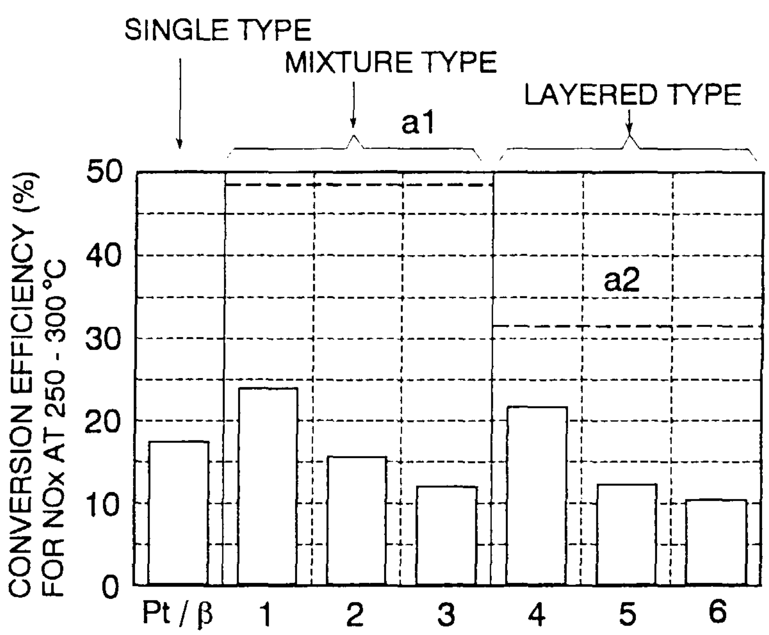
SINGLE TYPE
MIXTURE TYPE
LAYERED TYPE
a1
a2
CONVERSION EFFICIENCY (%)
FOR NOx AT 250 - 300 °C
50
40
30
20
10
0
Pt / β
1
2
3
4
5
6

FIG. 16

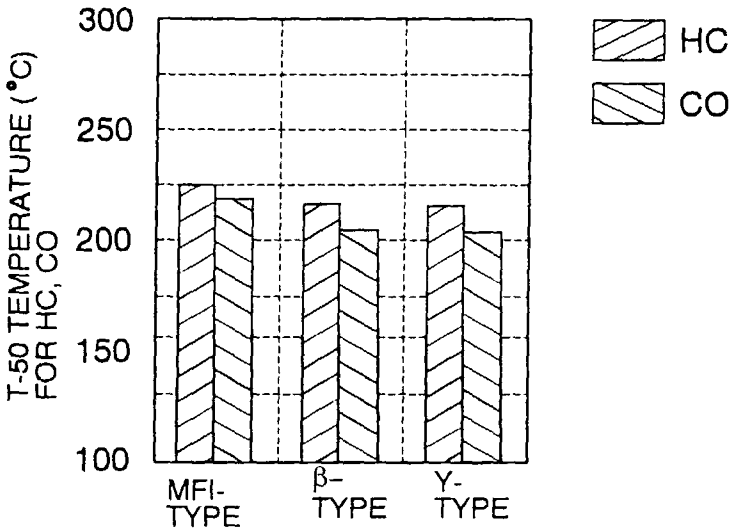
T-50 TEMPERATURE (°C) FOR HC, CO
300
250
200
150
100
HC
CO
MFI-TYPE
β-TYPE
Y-TYPE

FIG. 17

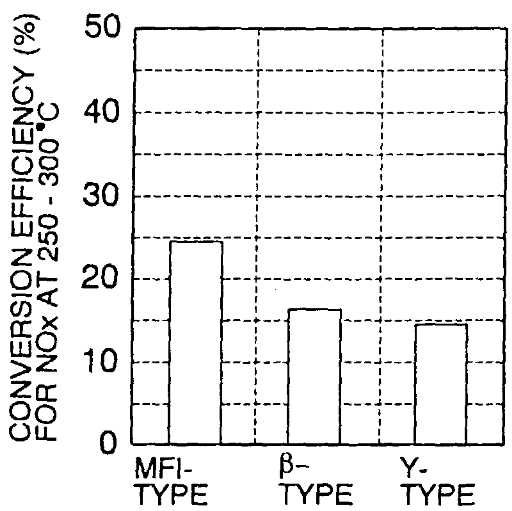
CONVERSION EFFICIENCY (%) FOR NOx AT 250 - 300°C
50
40
30
20
10
0
MFI-TYPE
β-TYPE
Y-TYPE

FIG. 18

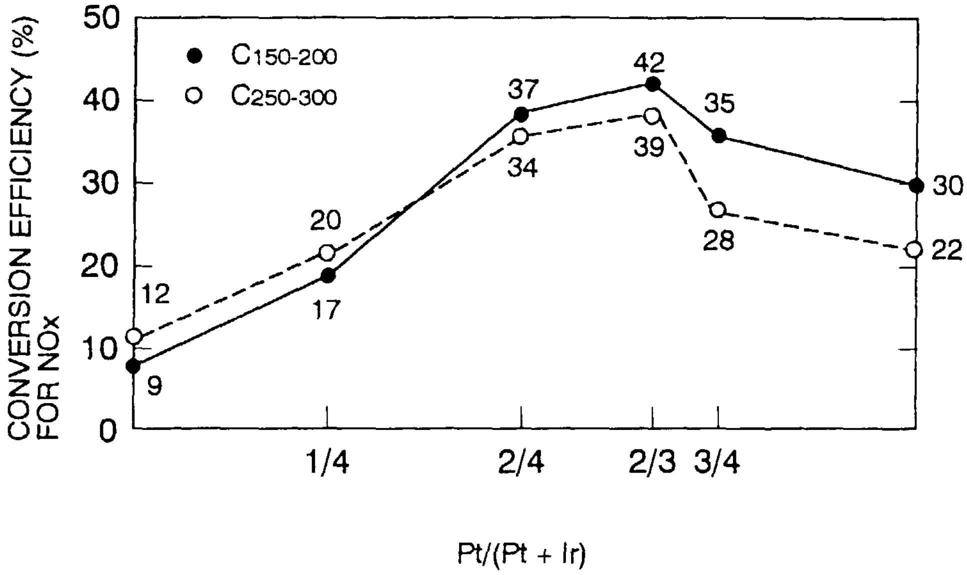
CONVERSION EFFICIENCY (%) FOR NOx
50
40
30
20
10
0
C150-200
C250-300
12
9
20
17
37
34
42
39
35
28
30
22
1/4
2/4
2/3
3/4
Pt/(Pt + Ir)

FIG. 19

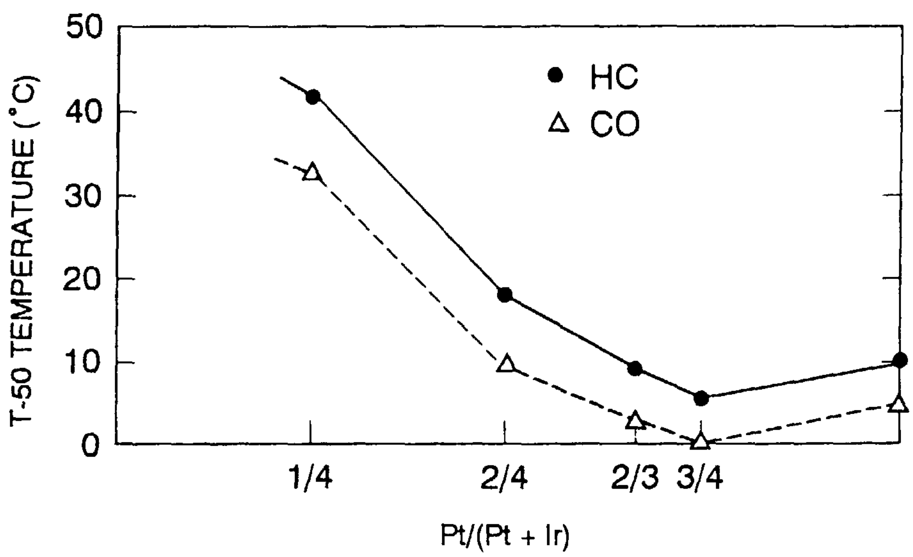
T-50 TEMPERATURE (°C)
50
40
30
20
10
0
HC
CO
1/4
2/4
2/3
3/4
Pt/(Pt + Ir)

# FIG. 20

CATALYTIC CONVERSION PERFORMANCE

| TYPE | MIXTURE RATIO A : B | T-50 TEMPERATURE(℃) | | CONVERSION EFFICIENCY(%) | |
|---|---|---|---|---|---|
| | | HC | CO | $C_{150-250}$ | $C_{250-300}$ |
| MIXTURE TYPE I | A ONLY | 225 | 218 | 19 | 50 |
| | 4 : 1 | 205 | 195 | 34 | 47 |
| | 3 : 1 | 183 | 170 | 38 | 46 |
| | 2 : 1 | 168 | 157 | 39 | 43 |
| | 1 : 1 | 164 | 154 | 42 | 39 |
| | 1 : 2 | 167 | 155 | 35 | 29 |
| | 1 : 4 | 165 | 154 | 32 | 26 |
| | B ONLY | 165 | 155 | 33 | 23 |
| LAYERED TYPE I | 1 : 1 | 220 | 208 | 25 | 42 |
| LAYERED TYPE II | 1 : 1 | 160 | 151 | 35 | 28 |
| IN-LINE TYPE | 1 : 1 | 166 | 152 | 34 | 31 |
| MIXTURE TYPE II | 1 : 1 | 161 | 152 | 38 | 37 |
| MIXTURE TYPE III | 1 : 1 | 166 | 153 | 36 | 36 |

European Patent Office

# EUROPEAN SEARCH REPORT

Application Number
EP 98 10 5891

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 96 01142 A (FORD MOTOR COMPANY) 18 January 1996<br>* the whole document *<br>--- | 1-24 | B01D53/94 |
| A,P | EP 0 782 880 A (NGK INSULATORS) 9 July 1997<br>* claims; figures *<br>--- | 1-24 | |
| A | EP 0 749 774 A (NGK INSULATORS) 27 December 1996<br>* claims; examples *<br>--- | 1-24 | |
| A | EP 0 485 180 A (NGK INSULATORS) 13 May 1992<br>--- | | |
| A | EP 0 443 765 A (ENGELHARD) 28 August 1991<br>--- | | |
| A | EP 0 428 752 A (N.E. CHEMCAT CORPORATION) 29 May 1991<br>----- | | |

TECHNICAL FIELDS SEARCHED (Int.Cl.6)
B01D

The present search report has been drawn up for all claims

| Place of search | Date of completion of the search | Examiner |
|---|---|---|
| THE HAGUE | 29 June 1998 | Bogaerts, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)